Europäisches Patentamt

European Patent Office

Office européen des brevets

(11) Veröffentlichungsnummer : **0 038 514**
**B1**

# EUROPÄISCHE PATENTSCHRIFT

(45) Veröffentlichungstag der Patentschrift :
13.06.84

(51) Int. Cl.³ : **H 04 N   1/40**

(21) Anmeldenummer : 81102853.9

(22) Anmeldetag : 14.04.81

(54) Verfahren und System zum Feststellen der Grenzlinien zwischen zwei Flächen unterschiedlicher Farbdichte.

(30) Priorität : 23.04.80 US 142974

(43) Veröffentlichungstag der Anmeldung :
28.10.81 Patentblatt 81/43

(45) Bekanntmachung des Hinweises auf die Patenterteilung : 13.06.84 Patentblatt 84/24

(84) Benannte Vertragsstaaten :
AT BE CH DE FR GB IT LI NL SE

(56) Entgegenhaltungen :
DE-B- 1 105 914
FR-A- 2 290 110

(73) Patentinhaber : AMERICAN HOECHST CORPORA-
TION
Route 202-206 North
Somerville, N.J. 08876 (US)

(72) Erfinder : Lew, Yung
10422 Kamuela Drive
Huntington Beach California 92646 (US)

(74) Vertreter : Zounek, Nikolai, Dipl.-Ing. et al
c/o KALLE Niederlassung der Hoechst AG Patentabteilung Postfach 3540
Rheingaustrasse 190 D-6200 Wiesbaden 1 (DE)

## Beschreibung

Die Erfindung betrifft ein Verfahren und ein System zum Feststellen der Grenzlinien zwischen zwei Flächen unterschiedlicher Farbdichte auf einem Gegenstand anhand eines elektrischen Signals, welches dem von dem Gegenstand reflektierten Licht eines Strahls entspricht, der auf eine vorgegebene Zielfläche während des Abtastens des Gegenstandes auftrifft.

Die Erfindung findet im allgemeinen Anwendung bei Abbildungssystemen und -verfahren und insbesondere bei einem System und einem Verfahren zur Wiedergabe eines durch einen Strahl abgetasteten Bildes. Wird ein Bild auf einem Medium zur Umwandlung in ein elektrisches Videosignal abgetastet, so ist im allgemeinen die Modulationsübertragungsfunktion des Videosignals in ihrer Bandbreite durch die Zielfläche oder Größe des Strahls, die Lichtstreuung im Medium und die Bandbreite der Schaltung begrenzt, in der das Videosignal erzeugt und verarbeitet wird. Diese begrenzte Bandbreite kann zu einer ungenügenden Auflösung für eine angemessene Wiedergabe des Bildes führen. Dieses Problem ergibt sich beispielsweise an den Grenzen zwischen Flächen unterschiedlicher Farbdichte in gerasterten Bildern, die in einem Laser-Graviersystem abgetastet werden. Der Pegel des Videosignals an den Grenzen ändert sich mit der Breite und dem Farbpegel der Flächen und dementsprechend können die Grenzen nicht mit Hilfe eines einfachen Pegeldetektors festgestellt werden.

Es ist auch bekannt, die Grenzlinien zwischen Flächen unterschiedlicher Farbdichte aufgrund der Änderungen im Anstieg der Videosignale zu bestimmen. Jedoch liefert diese Technik keine zufriedenstellenden Ergebnisse, da die Größe der Änderung im Anstieg nicht nur von der Breite der gefärbten Flächen und der Größe des Videosignals sondern auch von der Änderung der Farbe selbst abhängt. Demgemäß ist es nicht möglich, die Lagen der Grenzen mit einem Steigungs- bzw. Flankendetektor genau zu bestimmen.

Aus der DE-B 1 105 914 ist eine Schaltung zur automatischen Regelung und/oder Begrenzung der Höhe von Impulsfolgen mit einem Verstärker und einem Steuerkreis bekannt, welcher den Verstärker abhängig von einer Regelspannung regelt. Die Regel- und Begrenzungsschaltung enthält eine Verzögerungsleitung für die Impulsfolgen mit mehreren verschiedene Verzögerungszeiten aufweisenden Ausgangsabgriffen, die mit einem Summierungsnetzwerk verbunden sind, dessen Ausgangsleitung jeweils einen Impuls liefert, der durch Integration der von den Ausgangsabgriffen abgenommenen Impulse entsteht. Der Ausgangsimpuls einer ausgewählten Ausgangsleitung der Verzögerungseinrichtung wird dem Gitter einer Kathodenröhre zugeleitet, deren Kathode auf dem gleichen Potential wie die Kathode eines Kathodenverstärkers liegt. Das Gitter dieses Kathodenverstärkers wird mit dem integrierten Impuls der Ausgangsabgriffe der Verzögerungseinrichtung beaufschlagt. Die Begrenzung der in der gemeinsamen Ausgangsleitung der Verzögerungseinrichtung bestehenden Potentiale erfolgt durch Dioden, welche mit den Abgriffen eines Spannungsteilers verbunden sind, der einerseits geerdet und andererseits an eine Gleichstromquelle angeschlossen ist. Die Dioden begrenzen die Höhe des von der Verzögerungseinrichtung und dem Summierungsnetzwerk gelieferten Steuersignals, das an das Gitter des Kathodenverstärkers gelegt wird. Diese bekannte Regel- und Begrenzungsschaltung steuert die Übertragung eines veränderlichen elektrischen Bild- bzw. Abtastsignals, das durch das Abtasten einer Vorlage durch einen Fotovervielfacher erhalten wird, in Übereinstimmung mit den augenblicklichen und vorhergegangenen Pegeln des Signals. Ein Vergleich von aufeinander folgenden oder gleichzeitig gewonnenen Signalen wird dabei nicht vorgenommen und insbesondere wird weder der Mittelwert der Farbdichte innerhalb einer Zielfläche des Abtaststrahls festgestellt noch ein dem Farbwert in einem vorbestimmten Bereich der Zielfläche entsprechendes elektrisches Abtastsignal erhalten.

Aus der FR-A 2 290 110 ist ein Verfahren zum Erzeugen binärer Signale von einer Faksimile-Vorlage mittels einer Fernsehkamera bekannt, bei dem niederfrequente Signalanteile aus dem Ausgangssignal der Fernsehkamera zur Gewinnung einer ersten dynamischen Schwellwertspannung verwendet werden und mittels Synchronisationsimpulsen eine zweite Schwellwertspannung konstanter Amplitude erzeugt wird. In Abhängigkeit von dem Pegel der ersten Schwellwertspannung werden entweder die Differenz zwischen dem Ausgangssignal und dem ersten Schwellensignal oder die Differenz zwischen dem zweiten Schwellensignal und dem ersten dynamischen Schwellensignal als binäres Signal übertragen. Zur Gewinnung der ersten dynamischen Schwellenspannung ist ein Tiefpaß vorgesehen, dem die Ausgangssignale der Fernsehkamera zugeführt werden und die zweite Schwellenspannung wird durch einen Schwellenformer erhalten, dessen Eingang mit dem Impulsausgang der Fernsehkamera verbunden ist. Einem ersten Komparator wird das Ausgangssignal der Fernsehkamera und das Ausgangssignal des Tiefpasses zugeführt, während einem zweiten Komparator das vom Tiefpaß gebildete Schwellensignal und die Signale des Schwellenformers zugeleitet werden. Die Ausgänge der Komparatoren sind mit dem Eingang eines ODER-Gliedes verbunden, an dessen Ausgang das gewünschte binäre Signal abnehmbar ist. Bei diesem bekannten Verfahren und mit der für dieses Verfahren geeigneten Vorrichtung wird aus dem analogen, von der Fernsehkamera abgegebenen Videosignal einer abgetasteten Vorlage ein der Hell/Dunkelinformation der Vorlage entsprechendes Binärsignal erzeugt, wobei alle Grauwerte, die keine nützliche Information tragen, mittels der beiden Schwellenspannungen eliminiert werden. Es erfolgt kein Vergleich eines Mittelwertes der Farbdichte innerhalb der Zielfläche eines Abtaststrahles mit einem örtlichen Farbwertsignal, das dem Farbwert in einem vorbestimmten Bereich, beispielsweise dem Zentralbereich, der Zielfläche des Abtaststrahls entspricht.

Aufgabe der Erfindung ist es, ein Verfahren und ein System für die Wiedergabe von durch einen Strahl abgetasteten Bildern so zu verbessern, daß eine erhöhte Auflösung des Ausgangsbildes durch eine genauere Feststellung der Grenzlinien zwischen Flächen unterschiedlicher Farbdichte erhalten wird.

Diese Aufgabe wird erfindungsgemäß durch die Merkmale des Anspruchs 1 gelöst.

Die weitere Ausbildung des Verfahrens ergibt sich aus Merkmalen der Ansprüche 2 bis 4.

Das System zum Feststellen der Grenzlinien zwischen zwei Flächen unterschiedlicher Farbdichte auf einem Gegenstand anhand eines elektrischen Signals, welches dem von dem Gegenstand reflektierten Licht eines Strahls entspricht, der auf eine vorgegebene Zielfläche während des Abtastens des Gegenstandes auftrifft, zeichnet sich dadurch aus, daß Einrichtungen vorgesehen sind, die auf das elektrische Signal ansprechen und ein Signal entsprechend einem Mittelwert der Farbdichte innerhalb der Zielfläche des Strahls erzeugen, daß eine Einrichtung das elektrische Signal abtastet und ein örtliches Farbwertsignal entsprechend dem Farbwert in einem vorgegebenen Bereich der Zielfläche erzeugt, und daß eine Einrichtung das örtliche Farbwertsignal mit dem Mittelwert-Farbsignal vergleicht und ein Ausgangssignal entsprechend den relativen Pegeln dieser beiden Signale liefert.

Somit wird nach der Erfindung das Videosignal überwacht, um einen örtlichen Mittelwert der Farbdichte inerhalb der Zielfläche des Abtaststrahls zu bestimmen. Der örtliche Farbwert im Mittelpunkt der Zielfläche wird mit dem Mittelwert-Farbsignal verglichen, um die Lage der Grenzlinien zwischen Flächen unterschiedlicher Farbdichte feststellen zu können.

Weitere Einzelheiten der Erfindung werden anhand des in den Zeichnungen dargestellten Ausführungsbeispiels beschrieben.

Es zeigen :

Figur 1 ein vereinfachtes Blockschaltbild einer Ausführungsform eines Abbildungssystems nach der Erfindung,

Figur 2 ein Schaltdiagramm eines Teils des Abbildungssystems nach Fig. 1, und

Figur 3 ein Wellenformdiagramm zur Darstellung der Betriebsweise des Systems beim Feststellen der Grenzlinien zwischen den Flächen unterschiedlicher Farbdichte.

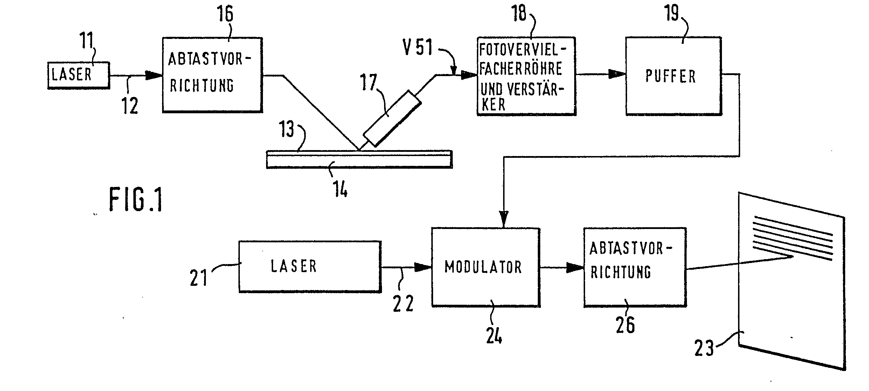

Wie in Fig. 1 gezeigt, umfaßt das System einen Laser 11, der einen Lesestrahl 12 zum Abtasten eines Umbruchs oder einer sonstigen Kopie 13, die auf einem Kopiertisch 14 befestigt ist, erzeugt. Der Strahl durchläuft eine Abtastvorrichtung 16, die den Strahl derart ablenkt, daß er aufeinanderfolgende Zeilen auf der Eingangskopie in Längsrichtung rasterförmig abtastet.

Eine Fiberoptik-Anordnung 17 empfängt Licht, das die Eingabekopie 13 von dem Lesestrahl 12 reflektiert. Diese Anordnung umfaßt eine Vielzahl von optischen Fadersträngen, von denen die einen Enden in einer Reihe angeordnet sind, die im wesentlichen parallel zu den Abtastlinien auf der Eingabekopie verläuft. Die anderen Enden der Fasern sind in Nähe einer Fotovervielfacherröhre oder eines sonstigen geeigneten Fotodetektors zusammengefaßt, der ein elektrisches Signal liefert, welches der von der Kopie durch den Lesestrahl abgetasteten Information entspricht. Dieses Signal wird einem Verstärker 18 zugeführt, anschließend digitalisiert und in einem Puffer 19 gespeichert.

Das System umfaßt des weiteren einen Laser 21, der einen Schreibstrahl für die Wiedergabe eines Bildes der Eingabedaten auf einem Ausgabemedium 23, wie beispielsweise einer Druckplatte erzeugt. Der Schreibstrahl wird in Übereinstimmung mit den im Puffer 19 gespeicherten Daten moduliert und der modulierte Strahl wird über das Ausgangsmedium in rasterförmiger Weise durch eine Abtastvorrichtung 26 abgelenkt. In einem Sytem, in dem das Ausgabemedium gleichzeitig mit der Eingabekopie abgetastet wird, werden zweckmäßigerweise der Lese- und der Schreibstrahl zusammen längs einem gemeinsamen optischen Weg durch die gleichen Abtastelemente abgelenkt, so daß in diesem Fall die Abtastvorrichtungen 16 und 26 zu einer einzigen Einheit zusammengefaßt sind. In einem Faksimilesystem, in welchem die Lese- und Schreibstationen getrennt sind, müssen getrennte Abtastvorrichtungen verwendet werden und es werden räumlich kodierte Abtastsignale angewandt, um eine Synchronisation zwischen dem Lese- und dem Schreibstrahl zu erhalten, wie dies im einzelnen in der US-Patentschrift 4,081,842 beschrieben ist.

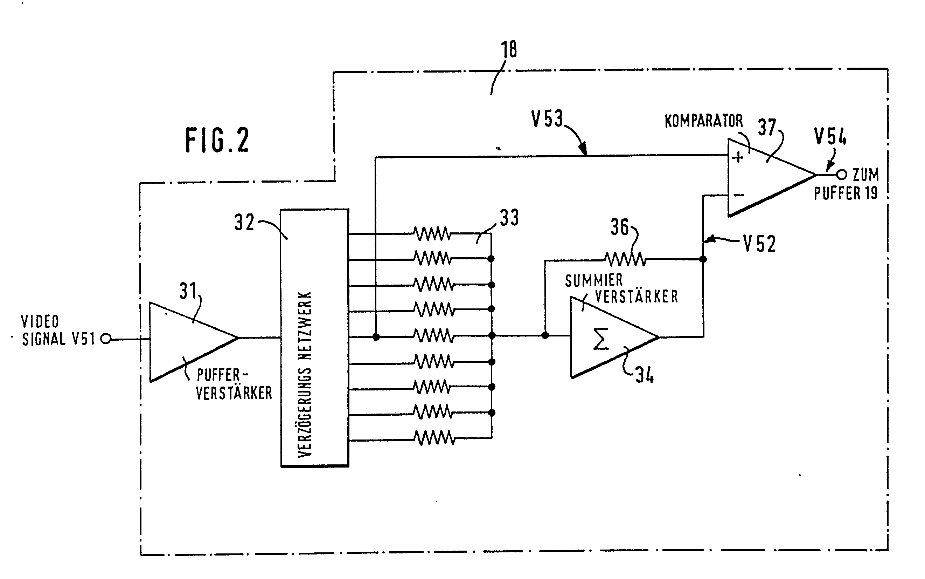

Wie in Fig. 2 dargestellt, wird das von der Fotovervielfacherröhre, die mit der Fiberoptik-Anordnung 17 zusammenarbeitet, erhaltene Videosignal dem Eingang eines Pufferverstärkers 31 zugeführt. Der Ausgang dieses Verstärkers ist mit dem Eingang eines Verzögerungsnetzwerkes 32 verbunden, das in der dargestellten Ausführungsform neun Ausgangsleitungen aufweist, um Ausgangssignale zu liefern, die untereinander gleichgroßen zeitlichen Abstand besitzen. Da der Lesestrahl mit einer konstanten Geschwindigkeit abtastet, entspricht die Zeitverzögerung zwischen aufeinanderfolgenden verzögerten Signalen einem festen Abstand auf der Eingabekopie. Der Gesamtbetrag der Verzögerung wird so gewählt, daß er der Breite der Zielfläche auf der Eingabekopie entspricht, so daß die verzögerten Videosignale den Lichtpegel repräsentieren, der durch die einzelnen Bereiche der Kopie über die gesamte Zielfläche des Strahls hinweg reflektiert wird.

Zur Bildung eines gewichteten Mittelwerts der Videosignale, die von dem Verzögerungsnetzwerk 32 geliefert werden, ist eine Einrichtung vorgesehen, die aus einem Wichtungsnetzwerk 33 und einem Summierverstärker 34 besteht. Das Wichtungsnetzwerk 33 umfaßt eine Anzahl von Widerständen, die parallel zueinander geschaltet sind und die Ausgangsleitungen des Verzögerungsnetzwerkes 32 mit dem Eingang des Summierverstärkers 34 verbinden. Die Widerstandswerte dieser Widerstände können so ausgewählt werden, daß jede gewünschte Wichtung der verzögerten Signale bei der Bestimung des Farbwertes erhalten werden kann, der als eine Bezugsgröße verwendet wird. Der Verstärkungsfaktor des Verstärkers 34 wird durch die relativen Werte der Widerstände des Wichtungsnetzwerkes und durch einen Widerstand 36 zum Einstellen des Verstärkungsfaktors bestimmt, der zwischen dem Ausgang und dem Eingang des Verstärkers 34 geschaltet ist. Bei der gezeigten bevorzugten Ausführungsform besitzen alle Widerstände des Wichtungsnetzwerkes 33 den gleichen Wert, so daß alle Bereiche der Zielfläche einen gleichen Anteil zu dem Mittelwert-Farbsignal beitragen.

Es ist des weiteren eine Einrichtung zum Vergleich des Videosignals eines vorgegebenen Bereichs der Zielfläche mit dem Mittelwert-Farbsignal vorhanden, um ein Ausgangssignal zu liefern, wenn das örtliche Farbsignal eine in bezug auf das Mittelwert-Farbsignal vorbestimmte Größe erreicht. Diese Einrichtung umfaßt einen Komparator 37, von dem der eine Eingang mit einer zentralen Ausgangsleitung des Verzögerungsnetzwerkes 32 verbunden ist. Der Ausgang des Summierverstärkers 34 ist an dem zweiten oder Referenzeingang des Komparators 37 angeschlossen, während der Ausgang des Komparators 37 mit dem Eingang des Puffers 19 verbunden ist.

Im folgenden wird die Betriebsweise und die Anwendung des Systems nach den Figuren 1 und 2 sowie das Verfahren nach der Erfindung beschrieben.

Während der Lesestrahl die Eingangskopie abtastet, erfolgt im Verzögerungsnetzwerk 32 eine zeitweilige Speicherung der Videosignale von neun gleichgroßen räumlichen Bereichen auf der Kopie. Da sich diese Bereiche über die Zielfläche des Strahls erstrecken, entspricht der Mittelwert der gespeicherten Signale dem Farbmittelwert für die gesamte Zielfläche. Das Videosignal des zentralen Bereichs des Strahls wird verglichen mit dem Mittelwert-Farbsignal für die gesamte Zielfläche und an den Grenzlinien zwischen Flächen unterschiedlicher Farbdichte sind die dem Komparator 37 zugeführten Signale gleichgroß. Die Ausgangssignale des Komparators werden im Puffer 19 gespeichert, um die Modulation des Schreibstrahls 22 zu steuern.

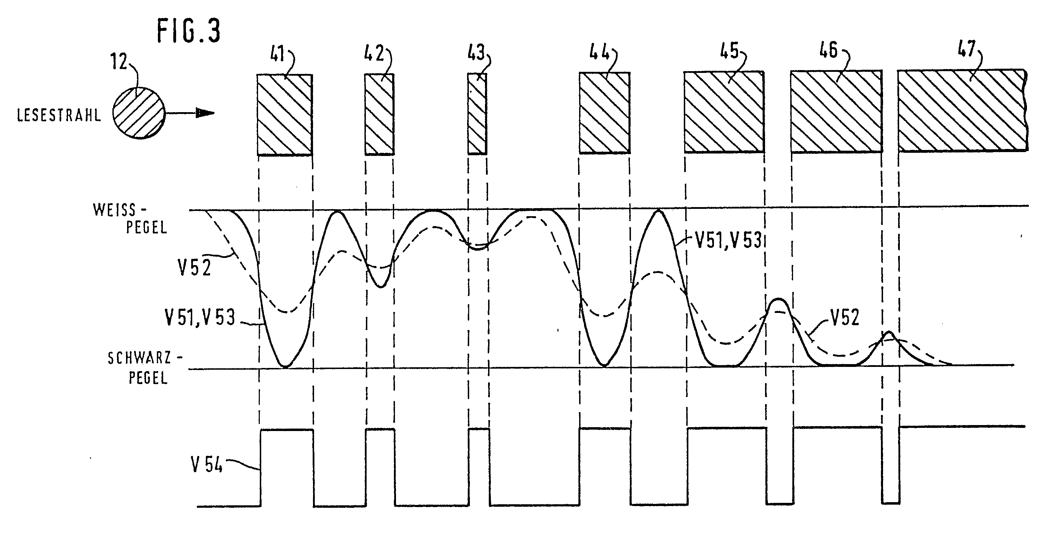

Die Betriebsweise des Systems wird des weiteren unter Bezugnahme auf Fig. 3 erläutert. In dieser Figur ist dargestellt, wie der Lesestrahl 12 eine Zeile abtastet, die eine Anzahl schwarzer Balken 41-47, die durch einen weißen Hintergrund voneinander getrennt sind, enthält. Die Balken besitzen unterschiedliche Breiten, jedoch sind ihre Vorderkanten entlang der Abtastzeile jeweils räumlich gleichweit voneinander entfernt. Das Videosignal V51, erzeugt durch die Fotovervielfacherröhre, der die Fiberoptikanordnung 17 zugeordnet ist, verändert sich im wesentlichen sinusförmig, wenn der Strahl die schwarzen Balken und die weißen Zwischenräume zwischen den Balken abtastet. Die Amplitude des Signals ändert sich in Übereinstimmung mit den entsprechenden Breiten der schwarzen und weißen Flächen, die der Strahl abtastet. Somit ergibt sich, daß die Amplitude der schmalen Balken näher dem weißen Pegel sich bewegt und bei breiteren Balken näher dem schwarzen Pegel.

Das Mittelwert-Bildsignal V52 ändert sich im wesentlichen sinusförmig in Phase mit dem Eingangsvideosignal V51. Die Amplitudenveränderungen des Signals V52 sind im allgemeinen niedriger als diejenigen des Signals V51, wie dies in Fig. 3 dargestellt ist. Das verzögerte Videosignal V53 im Zentrum der Zielfläche ist ähnlich zu dem Eingangssignal V51, und aus Gründen der besseren Übersichtlichkeit sind diese beiden Signale durch die gleiche Wellenform in Fig. 3 dargestellt.

Das Ausgangssignal V54 des Komparators 37 hängt von den relativen Pegeln der Signale V52 und V53 ab. Wie dies dargestellt ist, überqueren diese Signale die Grenzlinien der Balken und der Komparatorausgang ist hoch, wenn das Videosignal V53 unter dem Pegel des Referenzsignals V52 liegt und ist niedrig, wenn das Videosignal kleiner als das Bezugssignal ist. Für ein positives Abbildungssystem wird der Schreibstrahl eingeschaltet, wenn der Komparatorausgang niedrig ist und ausgeschaltet, wenn der Komparatorausgang hoch ist. Für ein negatives Ausgangsbild wird umgekehrt vorgegangen, d. h. der Schreibstrahl wird eingeschaltet, wenn der Komparatorausgang hoch ist und wird ausgeschaltet, wenn der Komparatorausgang niedrig ist.

Mit der Erfindung wird u. a. der Vorteil erzielt, daß mit einem Bezugssignal veränderlicher Amplitude die Grenzlinien zwischen Flächen unterschiedlicher Farbdichte in einem Bild mit großer Genauigkeit lokalisiert werden können. Daraus ergibt sich eine größere Auflösung und eine bessere Ausgangsbildqualität.

**Ansprüche**

1. Verfahren zum Feststellen der Grenzlinien zwischen zwei Flächen unterschiedlicher Farbdichte auf einem Gegenstand anhand eines elektrischen Signals, welches dem von dem Gegenstand reflektierten Licht eines Strahls entspricht, der auf eine vorgegebene Zielfläche während des Abtastens des Gegenstandes auftrifft, dadurch gekennzeichnet, daß das elektrische Signal verarbeitet wird, um ein Farbsignal zu erhalten, das einem Mittelwert der Farbdichte innerhalb der Zielfläche des Strahls entspricht, daß das elektrische Signal abgetastet wird, um ein dem Farbwert in einem vorbestimmten Bereich der Zielfläche entsprechendes Signal zu erhalten, daß dieses örtliche Farbwertsignal mit dem Mittelwert-Farbsignal verglichen wird und daß ein Ausgangssignal erzeugt wird, wenn das örtliche Farbwertsignal eine vorgegebene Größe in bezug auf das Mittelwert-Farbsignal erreicht.

2. Verfahren nach Anspruch 1, dadurch gekennzeichnet, daß das Mittelwert-Farbsignal gewonnen wird, indem die dem elektrischen Signal entsprechenden Signale zu verschiedenen Zeitpunkten gespeichert werden, wenn der Strahl eine Strecke abtastet, die der Breite der Zielfläche entspricht, daß die gespeicherten Signale in vorgegebener Weise gewichtet werden und daß die gewichteten Signale gemittelt werden, um das Mittelwert-Farbsignal zu erhalten.

3. Verfahren nach Anspruch 2, dadurch gekennzeichnet, daß das elektrische Signal über eine Verzögerungsleitung läuft, um die gespeicherten Signale zu gewinnen.

4. Verfahren nach Anspruch 2, dadurch gekennzeichnet, daß das örtliche Farbwertsignal aus einem der gespeicherten Signale erhalten wird, das in Übereinstimmung mit dem Farbwert im Zentralbereich der Zielfläche ausgewählt wird.

5. System zum Feststellen der Grenzlinien zwischen zwei Flächen unterschiedlicher Farbdichte auf einem Gegenstand anhand eines elektrischen Signals, welches dem von dem Gegenstand reflektierten Licht eines Strahls entspricht, der auf eine vorgegebene Zielfläche (13) während des Abtastens des Gegenstandes auftrifft, dadurch gekennzeichnet, daß Einrichtungen (33, 34) vorgesehen sind, die auf das elektrische Signal ansprechen und ein Signal entsprechend einem Mittelwert der Farbdichte innerhalb der Zielfläche (13) des Strahls erzeugen, daß eine Einrichtung (32) das elektrische Signal abtastet und ein örtliches Farbwertsignal entsprechend dem Farbwert in einem vorgegebenen Bereich der Zielfläche (13) erzeugt, und daß eine Einrichtung (37) das örtliche Farbwertsignal mit dem Mittelwert-Farbsignal vergleicht und ein Ausgangssignal entsprechend den relativen Pegeln dieser beiden Signale liefert.

6. System nach Anspruch 5, dadurch gekennzeichnet, daß die Einrichtungen (33, 34) zum Erzeugen des Mittelwert-Farbsignals mit einem Verzögerungsnetzwerk (32) mit einer Anzahl von zeitmäßig voneinander getrennten Ausgängen verbunden sind und daß die Einrichtung (33) zum Erzeugen eines gewichteten Durchschnittswertes aus den zeitmäßig voneinander getrennten Ausgangssignalen des Verzögerungsnetzwerkes (32) vorhanden ist.

7. Verfahren zum Abbilden eines Gegenstandes mit Flächen unterschiedlicher Farbdichte, bei dem der Gegenstand von einem Strahl, der auf eine vorgegebene Zielfläche gerichtet ist, abgetastet und ein elektrisches Signal entsprechend dem durch den Gegenstand reflektierten Licht des Strahls erzeugt wird, dadurch gekennzeichnet, daß das elektrische Signal ein Verzögerungsnetzwerk mit einer Anzahl von zeitmäßig voneinander getrennten Ausgängen durchläuft, um eine Reihe von Signalen entsprechend dem Farbwert in verschiedenen Bereichen der Zielfläche zu erhalten, wenn der Strahl den Gegenstand abtastet, daß die kurzzeitig verzögerten Signale zu einem Signal entsprechend einem Mittelwert der Farbdichte innerhalb der Zielfläche kombiniert werden, daß das dem Zentralbereich der Zielfläche entsprechende verzögerte Signal mit dem Mittelwert-Farbsignal verglichen wird, daß ein Schreibstrahl ein Ausgabemedium abtastet und daß die Intensität des Schreibstrahls geändert wird, um mit der Aufzeichnung einer Fläche anderer Farbe zu beginnen wenn das zentrale Farbsignal eine bestimmte Größe im Vergleich zu dem Mittelwert-Farbsignal erreicht.

8. System zum Abbilden eines Gegenstandes mit Flächen unterschiedlicher Farbdichte, mit einer Einrichtung (16) zum Abtasten des Gegenstandes mit einem Strahl vorgegebener Zielfläche, und mit Einrichtungen (18), die auf das von dem Gegenstand reflektierte Licht des Strahls ansprechen und ein elektrisches Signal entsprechend dem zu formenden Bild erzeugen, dadurch gekennzeichnet, daß ein Verzögerungsnetzwerk (32) auf das elektrische Signal anspricht, das eine Anzahl von zeitmäßig zueinander versetzten Ausgängen aufweist und eine Reihe von Signalen entsprechend den jeweiligen Farbwerten in den verschiedenen Bereichen der Zielfläche (13) während des Abtastens des Gegenstandes erzeugt, daß Einrichtungen (33, 34) die Signale des Verzögerungsnetzwerks (32) zu einem dem Mittelwert der Farbdichte innerhalb der Zielfläche entsprechenden Signal kombinieren, daß ein Komparator (37) das dem Zentralbereich der Zielfläche zugehörige Signal mit dem Mittelwert-Farbsignal vergleicht, daß eine Einrichtung (26) einen Schreibstrahl über ein Ausgangsmedium (23) führt, auf dem das Bild des Gegenstandes abgebildet wird und daß Einrichtungen (19, 24) auf den Ausgang des Komparators (37) ansprechen, um den Schreibstrahl in Übereinstimmung mit den relativen Pegeln des Zentralbereichssignals und des Mittelwert-Farbsignals zu modulieren.

**Claims**

1. Method for detecting the boundary lines between two areas of different color density onto an object from an electrical signal representative of light reflected by the object from a beam which impinges upon a predetermined target area during the scanning across the object, characterised in that processing the electrical signal to provide a color signal corresponding to an average of color density within the target area of the beam, in that sampling the electrical signal to provide a signal corresponding to the color level in a predetermined region of the target area, in that comparing the regional color level signal with the average color signal, and in that providing an output signal when the regional color level signal reaches a predetermined level relative to the average color signal.

2. Method as claimed in Claim 1, characterised in that the average color signal is provided by storing signals corresponding to the electrical signal at different times as the beam scans a distance corresponding to the width of the target area, in that weighting the stored signals in a predetermined manner, and in that averaging the weighted signals to provide the average color signal.

3. Method as claimed in Claim 2, characterised in that the electrical signal is applied to a delay line to provide the stored signals.

4. Method as claimed in Claim 2, characterised in that the regional color level signal is obtained from one of the stored signals which is chosen to correspond to the color level in the central region of the target area.

5. System for detecting the boundary lines between two areas of different color density onto an object from an electrical signal representative of light reflected by the object from a beam which impinges upon a predetermined target area during the scanning across the object characterised in that means (33, 34) are provided which are responsive to the electrical signal for providing a signal corresponding to an average of color density within the target area (13) of the beam, in that means (32) samples the electrical signal to provide a regional color level signal corresponding to the color level in a predetermined region of the target area (13), and in that means (37) compares the regional color level signal with the average color signal to provide an output signal corresponding to the relative levels of the regional and average signals.

6. System as claimed in Claim 5, characterised in that the means (33, 34) for providing the average color signal are connected to a delay line (32) having a plurality of temporally separated outputs and in that the means (33) exists for providing a weighted average of the temporally separated output signals from the delay line.

7. Method for forming an image of an object having areas of different color density, by scanning the object with a beam which is directed onto a predetermined target area and providing an electrical signal corresponding to light reflected by the object from the beam, characterised in that passing the electrical signal through a delay network having a plurality of temporally spaced outputs to provide a series of signals corresponding to the color level in different regions of the target area as the beam scans across the object, in that combining the temporally delayed signals to provide a signal corresponding to an average level of color density within the target area, in that comparing the delayed signal corresponding to the central region of the target area with the average color signal, in that scanning a writing beam across an output medium, and in that changing the intensity of the writing beam to begin the recording of an area of different color when the central region signal reaches a predetermined level relative to the average color signal.

8. System for forming an image of an object having areas of different color density with means (16) for scanning the object with a beam of predetermined target area, and with means (18) responsive to light reflected by the object from the beam for providing an electrical signal corresponding to the image to be formed, characterised in that a delay line (32) is responsive to the electrical signal, said delay line (32) having a plurality of temporally displaced outputs for providing a series of signals corresponding to the color levels in different regions of the target area (13) during the scanning across the object, in that means (33, 34) combine the signals from the delay line (32) to provide a signal corresponding to an average of the color density within the target area, in that a comparator (37) compares the signal corresponding to the central region of the target area with the average color signal, in that a means (26) scans a writing beam across an output medium (23) on which the image of the object is to be formed, and in that means (19, 24) responsive to the output of the comparator (37) modulate the writing beam in accordance with the relative levels of the central region signal and the average color signal.

**Revendications**

1. Procédé pour détecter les lignes de séparation entre deux surfaces possédant des densités de couleur différentes sur un objet à partir d'un signal électrique qui correspond à la lumière réfléchie par l'objet, d'un faisceau qui tombe sur une surface de cible prédéterminée pendant l'exploration de l'objet, caractérisé par le fait que le signal électrique est traité de manière à fournir un signal chromatique qui correspond à une valeur moyenne de la densité de couleur à l'intérieur de la surface de cible du faisceau, que le signal électrique est exploré de manière à fournir un signal correspondant au niveau chromatique dans une zone prédéterminée de la surface de cible, que ce signal local de niveau chromatique est comparé au signal chromatique moyen et qu'un signal de sortie est produit lorsque le signal local de niveau chromatique atteint une valeur prédéterminée par rapport au signal chromatique moyen.

2. Procédé suivant la revendication 1, caractérisé par le fait que le signal chromatique moyen est obtenu grâce à une mémorisation des signaux correspondant au signal électrique, à des instants différents lorsque le faisceau explore une voie qui correspond à la largeur de la surface de cible, que les signaux mémorisés sont pondérés d'une manière prédéterminée et que la moyenne des signaux pondérés est formée en vue d'obtenir le signal chromatique moyen.

3. Procédé suivant la revendication 1, caractérisé par le fait que le signal électrique parcourt une ligne à retard de manière à fournir les signaux mémorisés.

4. Procédé suivant la revendication 2, caractérisé par le fait que le signal local de niveau chromatique est obtenu à partir de l'un des signaux mémorisés qui est sélectionné en conformité avec le niveau chromatique dans la zone centrale de la surface de cible.

5. Système pour détecter les lignes de séparation entre deux surfaces possédant des densités de couleur différentes sur un objet à partir d'un signal électrique qui correspond à la lumière réfléchie par l'objet, d'un faisceau qui tombe sur une surface de cible prédéterminée (13) pendant l'exploration de l'objet, caractérisé par le fait qu'il est prévu des dispositifs (33, 34) qui répondent au signal électrique et produisent un signal correspondant à une valeur moyenne de la densité de couleur à l'intérieur de la surface de cible (13) du faisceau, qu'un dispositif (32) explore le signal électrique et produit un signal local de niveau chromatique correspondant au niveau chromatique dans une zone prédéterminée de la surface de cible (13), et qu'un dispositif (37) compare le signal local de niveau chromatique au signal chromatique moyen et délivre un signal de sortie correspondant aux niveaux relatifs de ces deux signaux.

6. Système suivant la revendication 5, caractérisé par le fait que les dispositifs (33, 34) servant à produire le signal chromatique moyen sont reliés à un réseau à retard (32) par un nombre de sorties séparées les unes des autres dans le temps et qu'il est prévu un dispositif (33) pour produire une valeur moyenne pondérée à partir des signaux de sortie, séparés les uns des autres dans le temps, du réseau à retard (32).

7. Procédé pour former l'image d'un objet comportant des surfaces possédant des densités de couleur différentes, selon lequel l'objet est exploré par un faisceau qui est dirigé sur une surface de cible prédéterminée, et un signal électrique correspondant à la lumière du faisceau, réfléchie par l'objet est produit, caractérisé par le fait que le signal électrique traverse un réseau à retard comportant un nombre de sorties séparées les unes des autres dans le temps de manière à fournir une série de signaux correspondant au niveau chromatique dans différentes zones de la surface de cible, lorsque le faisceau explore l'objet, que les signaux retardés d'un bref intervalle de temps sont combinés à un signal correspondant à une valeur moyenne de la densité de couleur à l'intérieur de la surface de cible, que le signal retardé correspondant à la zone centrale de la surface de cible est comparé au signal chromatique moyen, qu'un faisceau d'écriture explore un support de sortie et que l'intensité du faisceau d'écriture est modifiée pour commencer l'enregistrement d'une surface d'une autre couleur, lorsque le signal chromatique central atteint une valeur déterminée par rapport au signal chromatique moyen.

8. Système pour former l'image d'un objet comportant des surfaces possédant des densités de couleur différentes, comportant un dispositif (16) pour explorer l'objet avec un faisceau ayant une surface de cible prédéterminée, et des dispositifs (18) qui répondent à la lumière du faisceau, réfléchie par l'objet, et produisent un signal électrique conformément à l'image devant être formée, caractérisé par le fait qu'un réseau à retard (32) répond au signal électrique, ledit réseau comportant un nombre de sorties décalées dans le temps et produisant une série de signaux conformément aux niveaux chromatiques respectifs dans les différentes zones de la surface de cible (6) pendant l'exploration de l'objet, que des dispositifs (33, 34) combinent les signaux du réseau à retard (32) pour former un signal correspondant à la valeur moyenne de la densité de couleur à l'intérieur de la surface de cible, qu'un comparateur (37) compare le signal associé à la zone centrale de la surface de cible au signal chromatique moyen, qu'un dispositif (26) dirige un faisceau d'écriture au-dessus d'un support de sortie (23), sur lequel l'image de l'objet est formée, et que des dispositifs (19, 24) répondent à la sortie du comparateur (37) pour moduler le faisceau d'écriture en conformité avec les niveaux relatifs du signal de la zone centrale et du signal chromatique moyen.

FIG.1

LASER 11
12
ABTASTVOR-RICHTUNG 16
13
17
14
V 51
FOTOVERVIEL-FACHERRÖHRE UND VERSTÄR-KER 18
PUFFER 19

LASER 21
22
MODULATOR 24
ABTASTVOR-RICHTUNG 26
23

0 038 514

FIG.2

VIDEO SIGNAL V51

31 — PUFFER-VERSTÄRKER

32 — VERZÖGERUNGS NETZWERK

33

34 — SUMMIER VERSTÄRKER

36

37 — KOMPARATOR

V51 V52 V53 V54

18

ZUM PUFFER 19

FIG.3

12

LESESTRAHL

41  42  43  44  45  46  47

WEISS-
PEGEL

V52

V51,V53

V51,V53

SCHWARZ-
PEGEL

V52

V54

3

0 038 514